# EUROPÄISCHE PATENTSCHRIFT

(11) **EP 3 740 376 B1**
(45) Veröffentlichungstag und Bekanntmachung des Hinweises auf die Patenterteilung: **23.02.2022**
(21) Anmeldenummer: 19706853.9
(22) Anmeldetag: 08.01.2019
(51) Int. Cl.: B29C 64/35, B29C 64/379, B33Y 40/00, B22F 3/24, B22F 10/20, B22F 10/70, B08B 5/02, B08B 7/02, B22F 3/105

(54) **VERFAHREN ZUM ENTPACKEN EINES 3D-DRUCKTEILS**
METHOD FOR UNPACKING A 3D PRINTED PART
PROCÉDÉ DE DÉBALLAGE D'UNE PIÈCE IMPRIMÉE EN 3D

(30) Priorität: 16.01.2018 AT 500242018
(43) Veröffentlichungstag der Anmeldung: 25.11.2020
(73) Patentinhaber: Fill Gesellschaft m.b.H., 4942 Gurten (AT)
(72) Erfinder: WIESINGER, Alois, 4675 Weibern (AT)
(74) Vertreter: Burger, Hannes
(86) Internationale Anmeldenummer: PCT/AT2019/060005
(87) Internationale Veröffentlichungsnummer: WO 2019/140468

(56) Entgegenhaltungen:
- EP-A1- 3 036 088
- WO-A2-01/10631
- DE-A1-102016 209 618
- US-A1- 2007 126 157

## Beschreibung

Die Erfindung betrifft ein Verfahren zum Entpacken zumindest eines mittels eines generativen Fertigungsverfahrens hergestellten Bauteils aus einer Partikelmaterial-Schüttung aus nicht verfestigtem Partikelmaterial.

Die Fertigung von Bauteilen mittels generativer Verfahren, wie dem 3D-Druck, Rapid Prototyping und deren Äquivalenten, genießt den Ruf komplexe Geometrien und Bauteileigenschaften realisieren können, welche mit z.B. Guss- oder Umformverfahren nicht herstellbar wären. Dabei erfolgt der generative Aufbau bzw. Druckvorgang meistens innerhalb eines Fertigungsbehälters, oder auch Baubox genannt, durch schichtweises, lokales Verbinden eines Partikel- bzw. Pulvermaterials mittels eines Haftvermittlers und/oder Lasers und/oder einer Wärmequelle und/oder Elektronenstrahlquelle. Die entstehenden Bauteile werden dabei oftmals auf einer höhenverstellbaren Bauplattform nach unten um jeweils eine Schichtlage abgesenkt und der nicht verfestigte Materialanteil des Partikelmaterials umgibt dabei die entstandenen Bauteile. Nach dem Fertigungsvorgang ist die Baubox somit mit verfestigtem Partikelmaterial, also dem Bauteil, sowie nicht verfestigtem Partikelmaterial zumindest teilweise gefüllt. Dem Fachmann sind diese additiven Fertigungsverfahren hinreichend bekannt.

Im Anschluss an die Fertigung müssen die Bauteile vom Pulvermaterial bzw. dem Partikelmaterial befreit werden, wofür dem Fachmann eine Reihe von bekannten Verfahren zur Verfügung stehen. Das Entfernen des nicht verfestigten Partikelmaterials wird auch als Entpacken bezeichnet und kann z.B. durch Absaugen erfolgen, was jedoch mit sehr hohem Arbeitsaufwand verbunden ist. Auch das Ausblasen des nicht verfestigen Partikelmaterials kann aufgrund hoher Staubentwicklung oft nicht umgesetzt werden.

In der EP 3036088 B1 wird ein Verfahren zum Entpacken vorgestellt, wobei die Bauteile mit dem nicht verfestigten Partikelmaterial auf einer Bauteilplattform angeordnet sind, und wobei ein Hilfsrahmen dazu verwendet wird die Bauteile und das nicht verfestigte Partikelmaterial von unten her aufzunehmen und gemeinsam mit dem Hilfsrahmen von der Baubox zu entfernen. Daran anschließend erfolgt das Entpacken über einer Partikelmaterial-Auffangvorrichtung durch Ablassen des nicht verfestigten Partikelmaterials nach unten.

Auch in der EP 1192040 B1 wird zum Entfernen des nicht verfestigten pulverförmigen Materials der Träger bzw. die Bauplattform nach oben angehoben und das unverfestigte Pulvermaterial im Bereich des Randes des Behälters bzw. der Baubox mechanisch, durch z.B. Bürsten, oder durch Absaugen oder Wegblasen entfernt.

Die US 2007/0126157 A1, die WO 01/10631 A2 und die DE 10 2016 209 618 A1 offenbaren ein Verfahren zum Entpacken zumindest eines mittels eines generativen Fertigungsverfahrens hergestellten Bauteils aus einer Partikelmaterial-Schüttung aus nicht verfestigtem Partikelmaterial, wobei das Bauteil auf einer Hebevorrichtung aufliegt und von unten aus einer Baubox herausgehoben wird.

In der Regel sind die bekannten Maßnahmen zum Entpacken jedoch mit hohem zeitlichen und/oder personellem Aufwand verbunden, da die Baubox während des Entfernens des Partikelmaterials nicht für die Fertigung zur Verfügung steht. Außerdem kann ein erheblicher Aufwand an Platz und/oder zusätzliche Vorrichtungen erforderlich sein um die Baubox von den Bauteilen und dem nicht verfestigen Partikelmaterial zu befreien und den Entpackvorgang an einem anderen Ort zu bewerkstelligen.

Aufgabe der vorliegenden Erfindung war es, die Nachteile des Standes der Technik zu überwinden und ein Verfahren zur Verfügung zu stellen, mittels derer ein Benutzer in der Lage ist, ein relativ einfaches, schnelles und kostengünstiges Entpacken von zumindest einem Bauteil vorzunehmen. Das erfindungsgemäße Verfahren ist darüber auch auf einfache Weise automatisierbar, wodurch sich Vorteile hinsichtlich Zeitersparnis, Kosteneffizienz, Bedienersicherheit und/oder Bauteilqualität ergeben. Ferner lassen sich mit dem erfindungsgemäßen Verfahren der Reinigungsaufwand der produzierten Bauteile reduzieren, sowie die Beschaffenheit der Bauteiloberflächen hinsichtlich Rauigkeit verbessern.

Diese Aufgabe wird durch ein Verfahren gemäß den Ansprüchen gelöst.

Somit wird eine relativ einfache und kostengünstige Lösung geschaffen um das zumindest eine Bauteil von der Baubox zu entfernen und zugleich von nicht verfestigtem Partikelmaterial zu befreien. Die Abtransportvorrichtung kann dabei in Vertikalrichtung und/oder Horizontalrichtung dreh- und verschiebbar ausgeführt sein. Es sind hierbei neben dem Fachmann bekannten hängenden Kranvorrichtungen auch die Verwendung von flurgebundenen oder auch automatisierten Abtransportvorrichtungen und insbesondere eines Abtransportroboters denkbar. Es ist auch denkbar, dass als Abtransportvorrichtung zumindest eine Unterdruckvorrichtung zum Einsatz kommt, welche das zumindest eine Bauteil bevorzugt von oben mittels z.B. eines Saugnapfs kontaktiert und somit bauteilschonend abtransportiert. Die Abtransportvorrichtung ist nicht mit der Baubox verbunden und kann demnach während des Fertigungsprozesses von der Baubox entfernt werden.

Ebenso kann die Abtransportvorrichtung derart ausgebildet sein um Bewegungen, insbesondere periodische Bewegungen, in Vertikal- und/oder Horizontalrichtung bzw. um eine Vertikal- und/oder Horizontalachse mit dem zumindest einen Bauteil auszuführen. Bevorzugt ist die Abtransportvorrichtung dazu ausgebildet, dass die periodischen Bewegungen ungerichtet, also im Wesentlichen durch Vibrieren oder Rütteln, erfolgen können und durch eine Vertikal- und/oder Horizontalbewegung überlagert werden können.

Darüber hinaus kann vorgesehen sein, dass vor dem Abtransport das zumindest eine Bauteil, zur Reinigung und/oder Verbesserung der Oberflächenbeschaffenheit der Bauteiloberfläche, mittels der Abtransportvorrichtung zumindest teilweise innerhalb des nicht verfestigten fluidisierten Partikelmaterials bewegt wird.

Die Bewegung des zumindest einen Bauteils erfolgt somit relativ zum, das Bauteil zumindest teilweise umgebenden, nicht verfestigten fluidisierten Partikelmaterial. Das nicht verfestigte fluidisierte Partikelmaterial übt während der Bewegung des zumindest einen Bauteils eine Kraft auf die Bauteiloberfläche aus. In Verbindung mit der abrasiven Wirkung des nicht verfestigten fluidisierten Partikelmaterials kann dabei eventuell an der Bauteiloberfläche anhaftendes, nicht erwünschtes Partikelmaterial entfernt werden. Hierdurch kann eine Reinigung der Bauteiloberfläche erzielt werden und das abgelöste Partikelmaterial der Bauteiloberfläche verbleibt innerhalb der Baubox. Somit kann eine Art Schleifwirkung der Bauteiloberfläche erzielt werden. Hierdurch kann die Rauigkeit der Bauteiloberfläche wesentlich herabgesetzt werden und etwaiger Nacharbeitsaufwand des zumindest einen Bauteils reduziert werden.

Es kann auch vorgesehen sein, dass die Bewegung des zumindest einen, zumindest teilweise innerhalb des fluidisierten Partikelmaterials angeordneten, Bauteils mittels der Abtransportvorrichtung von einer periodischen ungerichteten Bewegung überlagert wird.

Eine ungerichtete Bewegung, wie etwa eine Rüttel- oder Vibrationsbewegung innerhalb des fluidisierten Partikelmaterials, des Bauteils kann die Abrasionswirkung der Relativbewegung des zumindest einen Bauteils, welche zumindest teilweise innerhalb des umgebenden, nicht verfestigten fluidisierten Partikelmaterials erfolgt, erhöhen.

Darüber hinaus kann vorgesehen sein, dass vor dem Abtransport das zumindest eine Bauteil zur Reinigung mittels der Abtransportvorrichtung um eine Horizontachse zumindest um 90° gedreht wird.

Durch eine Drehung bzw. Verkippung des zumindest einen Bauteils um zumindest 90° können etwaige Ablagerungen von nicht verfestigtem Partikelmaterial, welche sich in Ausnehmungen und/oder Hinterschneidungen des Bauteils während des Fertigungsprozesses gebildet haben, vom Bauteil effizient entfernt werden. Das lose, nicht verfestigte Partikelmaterial fällt durch die Drehbewegung des zumindest einen Bauteils in die Baubox und geht hierdurch nicht verloren. Weiters können hierdurch eventuelle nachgelagerte Reinigungsschritte reduziert werden.

Gemäß der Erfindung erfolgt der Abtransport des zumindest einen Bauteils mittels einer als Greifvorrichtung ausgeführten Abtransportvorrichtung.

Durch die Verwendung einer Greifvorrichtung kann das zumindest eine Bauteil zumindest zeitweilig form- und/oder kraftschlüssig kontaktiert und von der Baubox in Vertikal- und/oder Horizontalrichtung abtransportiert werden. Das Aufnehmen des zumindest einen Bauteils kann somit von oben, aber auch seitlich bzw. sogar von unten mittels der Abtransportvorrichtung auf relativ einfache Weise bewerkstelligt werden. Die Abtransportvorrichtung kann demnach dazu verwendet werden das zumindest eine Bauteil innerhalb oder auch oberhalb der Baubox zu kontaktieren und somit aus bzw. von der Baubox abzutransportieren. Auf diese Weise wird eine hohe Versatilität in Bezug auf die räumlichen Gegebenheiten der Fertigungseinrichtung ermöglicht und der Einsatz einer automatisierten Abtransportvorrichtung vereinfacht.

Auch die vor dem Abtransport möglichen Verfahrensschritte der Reinigung der Bauteiloberfläche, sowie eine Drehung des Bauteils um eine Horizontalachse kann mittels der als Greifvorrichtung ausgeführten Abtransportvorrichtung besonders effizient durchgeführt werden.

Das Fluidisieren des nicht verfestigten Partikelmaterials kann auf verschiedene Arten erfolgen und erleichtert das Abfließen des nicht verfestigen Partikelmaterials vom zumindest einen Bauteil. Unter Fluidisieren ist im Kontext dieser Anmeldung die Ausbildung eines Fließbetts oder Wirbelschicht des nicht verfestigen Partikelmaterials zumindest im Bereich um das zumindest eine Bauteil gemeint, wodurch das Kontaktieren bzw. Ergreifen der Bauteile erleichtert wird. Weiters wird durch das Fluidisieren die sogenannte Brückenbildung von nicht verfestigtem Partikelmaterial, welche durch lokales Abfließen von losem Partikelmaterial auftreten kann, effizient vermindert. Das nicht verfestige Partikelmaterial kann somit nach dem Entpacken und Abtransport des zumindest einen Bauteils in der Baubox verbleiben.

Ferner kann vorgesehen sein, dass das Fluidisieren des nicht verfestigen Partikelmaterials durch Einblasen oder Einpressen eines Fluids, bevorzugt Luft, erfolgt.

Als Fluid sind Gase oder Gasgemische und bevorzugt Luft denkbar, welches je nach verwendetem Partikelmaterial auch vorgeheizt oder gekühlt sein kann. Die Eintrittsöffnungen können dabei die Umwandung und/oder die Bodenplatte der Baubox durchdringend angeordnet sein. Die Anzahl und Anordnung der Eintrittsöffnungen sollte vom Fachmann je nach Größe der Baubox und/oder der zu fertigenden Bauteile gewählt werden.

Darüber hinaus kann vorgesehen sein, dass das Fluid an zumindest einer Eintrittsöffnung, bevorzugt von unten, in die Baubox geleitet wird.

Es hat sich als vorteilhaft erwiesen, wenn das Fluid seitlich aber auch im Wesentlichen von unten in die Baubox derart eingeleitet wird, dass es das nicht verfestigte Partikelmaterial nach oben hin zumindest teilweise durchströmt. Hierbei kann eine besonders gute Auflockerung des nicht verfestigten Partikelmaterials erreicht werden, wodurch ein Kontaktieren und Abtransport des zumindest einen Bauteils begünstigt wird. Das Fluid kann ebenso eingeblasen oder eingepresst, also durch z.B. einen Kompressor druckunterstützt, werden. Die zumindest eine Eintrittsöffnung kann verschließbar und/oder als Rückschlagventil ausgebildet sein, wodurch ein unbeabsichtigtes Eindringen des nicht verfestigen Partikelmaterials in die Zufuhrleitung verhindert werden kann.

Vorteilhaft ist auch eine Ausprägung, gemäß welcher vorgesehen sein kann, dass das Fluidisieren durch Einbringen von Schwingungen mittels zumindest eines Schwingungsgebers direkt und/oder indirekt in das nicht verfestigte Partikelmaterial erfolgt.

Das nicht verfestigte Partikelmaterial kann dabei mittels zumindest eines externen Schwingungsgebers direkt in Schwingung versetzt werden und/oder das nicht verfestigte Partikelmaterial in der Baubox indirekt in Schwingung versetzt werden. Im Falle der direkten Schwingungseinleitung, wird zumindest ein Schwingungsgeber im Nahbereich von 2 bis 20 cm zum Bauteil in das nicht verfestigte Partikelmaterial eingeführt. Der einzuführende externe Schwingungsgeber kann dabei z.B. stab-, schnecken- und/oder rohrförmig ausgebildet sein. Durch Rotations- und/oder Translationsbewegungen des Schwingungsgebers wird das nicht verfestigte Partikelmaterial in Schwingung versetzt und fluidisiert. Ebenso ist ein Schwingungsgeber vorstellbar, welcher über periodische Volumenänderung, das heißt durch periodische Expansion und Kontraktion, die Schwingungen erzeugt. Ein derartiger Schwingungsgeber kann beispielsweise als Aufblasvorrichtung oder auch mittels piezoelektrischer Aktuatoren realisiert werden.

Der externe Schwingungsgeber kann jedoch auch alternativ dazu, oder in Kombination mit zumindest einem in das nicht verfestigte Partikelmaterial eingeführten Schwingungsgeber, mit der Baubox gekoppelt sein. Das nicht verfestigte Partikelmaterial in der Baubox wird somit indirekt in Schwingung versetzt und folglich über den gesamten Inhalt der Baubox weitestgehend gleichmäßig fluidisiert. Dem Fachmann wird hierbei deutlich, dass eine Schwing- bzw. Rüttelbewegung mit geeigneter Frequenz dazu geeignet ist das lose nicht verfestigte Partikelmaterial in ein rieselfähiges und damit lockeres, fluidisiertes Partikelmaterial zu überführen. Die relativ einfachen konstruktiven Maßnahmen können zudem kostengünstig realisiert werden. Es ist ferner möglich, dass die Abtransportvorrichtung in das nicht verfestigte fluidisierte Partikelmaterial eindringt und das zumindest eine Bauteil zum Abtransport kontaktiert.

Ferner ist denkbar den externen Schwingungsgeber als fluiddurchströmtes Rohr bzw. Lanze auszuführen. Hierdurch kann das nicht verfestigte Partikelmaterial lokal nicht nur durch die mechanischen Schwingungen des Schwingungsgebers, sondern zudem auch durch das eingeblasene bzw. eingepresste Fluid in ein Fließbett übergeführt werden, was für komplex gestaltete Geometrien von Vorteil sei kann.

Gemäß einer Weiterbildung ist es möglich, dass eine in Vertikalrichtung verschiebbare Verstellvorrichtung, umfassend eine mit der Verstellvorrichtung koppelbare und mit verschließbaren Ablassöffnungen versehene Hubplatte, in Vertikalrichtung nach oben verschoben wird, wobei das nicht verfestigte Partikelmaterial durch die Ablassöffnungen der Hubplatte in die Baubox abfließt und von dieser aufgefangen wird. Die Hubplatte kann hierbei z.B. als Gitter ausgeführt sein. Die Verstellvorrichtung kann stirn- und/oder längsseitig an der Innenseite der Umwandung angeordnet sein. Die Verstellvorrichtung kann dabei Hebelarme aufweisen auf welchen die Hubplatte angeordnet ist. Ebenso ist eine Verstellvorrichtung, welche z.B. durch eine Hubvorrichtung mittels Hubzylindern an der Bodenplatte angeordnet ist, vorstellbar, um die Hubplatte in Vertikalrichtung nach oben bzw. unten zu verschieben.

Die Verstellvorrichtung kann zudem dazu verwendet werden die Hubplatte während des Fertigungsprozesses abzusenken. Ferner sollten die Ablassöffnungen der Hubplatte zumindest für die Dauer des Fertigungsprozesses verschließbar sein können. Im Falle einer Ausbildung der Hubplatte als Gitter ist es vorteilhaft, wenn ein zweites Gitter als zum ersten Gitter verschiebbares Gitter in Axialrichtung benachbart angeordnet ist, wodurch ein Verschlussmechanismus des ersten Gitters ausgebildet wird. Um das zumindest eine Bauteil während des Entpackvorgangs, respektive den Abtransport desselben, für die Abtransportvorrichtung einfacher kontaktierbar zu machen, ist es von Vorteil wenn die Ablassöffnungen hierzu geöffnet werden wodurch das fluidisierte nicht verfestigte Partikelmaterial in die Baubox abfließen kann.

Ferner kann es zweckmäßig sein, wenn die Hubplatte in Vertikalrichtung zumindest bis zum oberen Rand der Umwandung der Baubox verschoben wird und zumindest das zumindest eine Bauteil von der Abtransportvorrichtung oberhalb der Baubox aufgenommen und abtransportiert wird.

Hierdurch wird ein einfaches, rasches und sicheres Abtransportieren des zumindest einen Bauteils gewährleistet. Insbesondere ein seitliches Aufgreifen bzw. Kontaktieren des zumindest einen entpackten Bauteils und/oder der Hubplatte wird hiermit deutlich erleichtert, was zu einer Erhöhung der Prozessgeschwindigkeit, oder auch dem Einsatz von automatisierten Abtransportvorrichtungen beitragen kann.

Darüber hinaus kann vorgesehen sein, dass das zumindest eine Bauteil nach dem Anheben über den oberen Rand der Baubox auf der Hubplatte verbleibt und gemeinsam mit der Hubplatte von der Abtransportvorrichtung abtransportiert wird. Der Abstand der Hubplatte zum oberen Rand sollte zumindest so groß sein, dass die Unterseite der Hubplatte für die Abtransportvorrichtung zugänglich ist.

Ein seitliches Aufnehmen der Hubplatte, jedoch auch ein Aufnehmen von oben, wird dadurch signifikant vereinfacht. Ebenso wird der Einsatz von Flurfördergeräten als Abtransportvorrichtungen erleichtert. Das zumindest eine entpackte Bauteil kann mit der Hubplatte für anschließende Verfahrensschritte, wie etwa Reinigungen bzw. Abblasen der Bauteile, aber auch in ein Zwischenlager abtransportiert werden.

Weiters kann vorgesehen sein, dass nach dem Abtransport der Hubplatte und des zumindest einen Bauteils eine andere Hubplatte mit der verschiebbaren Verstellvorrichtung gekoppelt wird.

Ferner kann vorgesehen sein, dass zwischen 80% und 100%, insbesondere zwischen 90% und 100%, bevorzugt zwischen 97% und 100%, des nicht verfestigten Partikelmaterials in der Baubox verbleibt. Ziel ist es, dass möglichst wenig des nicht verfestigten Partikelmaterials aus der Baubox entfernt wird. Dieses Idealziel kann nicht immer zu 100% erreicht werden, da es vorkommen kann, dass geringe Mengen an nicht verfestigtem Partikelmaterial am Bauteil anhaften können und mit diesem aus der Baubox entfernt werden.

Dies erlaubt speziell bei mehreren Bauteilen auf der Hubplatte einen raschen Abtransport der Bauteile. Die koppelbare Ausführung der Hubplatte ermöglicht ferner, dass eine zweite Hubplatte an die Stelle einer ersten, abtransportierten Hubplatte bewegt wird und mit der Verstellvorrichtung gekoppelt wird. Der Fachmann erkennt, dass hier eine deutliche Reduktion der Gesamtprozesszeit erzielt werden kann.

Gemäß einer besonderen Ausprägung ist es möglich, dass im Anschluss an den Abtransport des zumindest einen Bauteils ein Verkippvorgang erfolgt, wobei die Baubox um einen Winkel von zumindest 90° um eine horizontale Verkippachse gekippt wird. Durch die zuvor beschriebenen, im Wesentlichen innerhalb der Baubox erfolgten Verfahrens schritte des Entpackens, befindet sich das gesammelte nicht verfestigte Partikelmaterial in der Baubox. Der Verkippvorgang dient zum "Auskippen" dieses nicht verfestigten Partikelmaterials in einen Auffangbehälter.

Der Verkippvorgang ist ein relativ einfach zu realisierender Verfahrensschritt, welcher konstruktiv einfach und kostengünstig zu realisieren ist. Es kann vorteilhaft sein, wenn nach dem Verkippvorgang ein Ausblasen, Absaugen oder ähnlicher Reinigungsschritt der Baubox erfolgt, um den nächsten Fertigungsprozess in der Baubox behinderungsfrei durchführen zu können. Nach dem Verkippvorgang wird die Baubox wieder in die ursprüngliche Lage zurückgekippt und der nächste Fertigungsprozess kann vorgenommen werden. Es ist dabei von untergeordneter Bedeutung ob die Hubplatte während des Verkippvorganges mit der Verstellvorrichtung gekoppelt ist, oder mit dem zumindest einen Bauteil abtransportiert wurde. Im Falle der gekoppelten Verstellvorrichtung ist es jedoch vorteilhaft, wenn die Hubplatte zumindest über den Rand der Baubox angehoben wurde, damit das nicht verfestigte Partikelmaterial ungehindert in den Auffangbehälter abfließen kann. Dies hat zudem den Vorteil, dass die Staubentwicklung bzw. ein unbeabsichtigtes seitliches Herausfließen des gesammelten nicht verfestigten Partikelmaterials reduziert werden kann. In diesem Fall kann die Hubplatte als Einfüllhilfe und räumliche Begrenzung fungieren, wodurch eine Trichterwirkung erzielt wird.

Entsprechend einer vorteilhaften Weiterbildung kann vorgesehen sein, dass der Verkippvorgang mittels zumindest einer Manipulatorvorrichtung durchgeführt wird.

Als Manipulatorvorrichtung sind hierbei nicht mit der Baubox verbundene, zu einer Kraft- bzw. Momentenübertragung auf die Baubox geeignete Maschinen bzw. Maschinenkomponenten gemeint. Insbesondere fallen hierunter Maschinen wie Stapler oder auch Robotervorrichtungen. Die Manipulatorvorrichtung kann mehrachsige Bewegungen ausführen, wodurch die Verkippung der Baubox um eine beliebige Achse ermöglicht wird.

Die Verkippachse kann eine beliebige Raumachse sein. Bevorzugt liegt die Verkippachse entlang und/oder quer zur Bodenplatte der Baubox. Eine solche horizontale Verkippachse kann auch entlang bzw. parallel zu einer der Kanten der Umwandung mit der Bodenplatte verlaufen. Es ist jedoch auch denkbar, dass die Verkippachse schräg verläuft und die Baubox nur tangiert, wodurch die Baubox durch die Verkippung räumlich betrachtet eine Schräglage einnimmt und das nicht verfestigte Partikelmaterial in einer Ecke der Baubox zusammenfließen kann.

Durch das Verkippen der Baubox um eine beliebige Raumachse kann erreicht werden, dass das rieselfähige, nicht verfestigte Partikelmaterial mit reduzierter Staubentwicklung und/oder Streuverlusten in den Auffangbehälter gekippt werden kann. Dies kann die Sauberkeit und somit Prozesssicherheit erhöhen.

Ferner kann es zweckmäßig sein, wenn die Abtransportvorrichtung als Manipulatorvorrichtung zur Verkippung der Baubox verwendet wird.

Die Verwendung der zuvor beschriebenen Abtransportvorrichtung als Manipulatorvorrichtung reduziert den maschinellen Aufwand und bietet somit kosten- und zeittechnische Vorteile.

Insbesondere kann es vorteilhaft sein, wenn als Manipulatorvorrichtung ein Koppelmittel mit der Baubox zumindest zeitweilig verbunden wird und durch Bewegung des Koppelmittels die Baubox um die Verkippachse gekippt wird. Das Koppelmittel kann z.B. durch eine oder mehrere Ketten und/oder Seile und/oder Haken ausgebildet sein. Das Koppelmittel ist mit der Baubox Aufnahmeelemente verbindbar, welche zum Koppelmittel form- und/oder funktionskomplementär ausgebildet sind. Wie zuvor beschrieben kann das Koppelmittel bzw. die Manipulatorvorrichtung auch durch die Abtransportvorrichtung ausgebildet sein, wodurch sich auf einfache Weise ein Verkippvorgang einleiten lässt, welcher besonders zeit- und kosteneffizient ist.

Ferner kann vorgesehen sein, dass als Manipulatorvorrichtung ein Druckmittel mit der Bodenplatte der Baubox gekoppelt wird und die Baubox um die Verkippachse gekippt wird.

Auch in dieser Ausführungsform ist es denkbar, dass als Manipulatorvorrichtung bzw. Druckmittel die zur Verkippung der Baubox erforderliche Vertikal- und/oder Querkraft durch die Abtransportvorrichtung ausgebildet wird. Das Druckmittel kann jedoch auch eine separate Einheit, wie z.B. einen oder mehrere Hydraulikzylinder umfassen, was besonders bei sehr schweren Lasten und/oder hoher Präzision vorteilhaft sein kann.

Darüber hinaus kann vorgesehen sein, dass der Verkippvorgang der Baubox zumindest zwei Mal durchgeführt wird. Die Baubox wird dabei aus der relativen Endposition des Verkippvorgangs zumindest teilweise zurück in Richtung der Ausgangsposition gekippt, also nicht notwendigerweise bis ganz in die Ausgangsposition.

Hierdurch kann erreicht werden, dass eventuell an den Innenflächen der Baubox anhaftendes nicht verfestigtes Partikelmaterial gelöst wird und durch den zumindest zweiten Verkippvorgang in den Auffangbehälter abfließen kann.

Vorteilhaft ist auch eine Ausprägung, gemäß welcher vorgesehen sein kann, dass der Verkippvorgang stoßweise durchgeführt wird. Das stoßweise bzw. ruckartige Verkippen der Baubox um die Verkippachse erlaubt eine verbesserte Sammlung des nicht verfestigen Partikelmaterials im Innenbereich der Baubox, welcher während des Verkippvorgangs in Vertikalrichtung zuunterst angeordnet ist.

Gemäß einer Weiterbildung ist es möglich, dass der Schwingungsgeber während des Verkippvorgangs mit der Baubox gekoppelt ist und das nicht verfestigte Partikelmaterial durch Aufbringen von Schwingungen von der Baubox gelöst wird.

Durch die beschriebene Maßnahme kann die Effizienz der Sammlung des nicht verfestigten Partikelmaterials im Innenbereich der Baubox erhöht werden. Der Aufwand für eine etwaige Reinigung der Baubox kann damit reduziert werden.

Beim erfindungsgemäßen Verfahren können somit mehrere Bauteile in der selben und/oder unterschiedlichen horizontalen und/oder vertikalen Ebenen innerhalb der Baubox angeordnet sein. Die Bauteile können auch zueinander versetzt angeordnet mittels generativem Fertigungsverfahrens hergestellt werden um die Packungsdichte der Bauteile innerhalb der Baubox zu erhöhen. Ferner können bei der Fertigung des zumindest einen Bauteils sogenannte Stütz- und/oder Haltestrukturen mitausgebildet werden, welche beim Abtransport des zumindest einen Bauteils im Wesentlichen innerhalb der Baubox verbleiben.

Es hat sich als vorteilhaft erwiesen, wenn mit dem Bauteil während des Fertigungsverfahrens ausgebildete Stützstrukturen während des Fluidisierens des nicht verfestigten Partikelmaterials eine Berührung der Bauteile untereinander, und somit eine mögliche Beschädigung, verhindern. Die Stützstrukturen geben eine Relativposition der Bauteile zueinander in Vertikal- und/oder Horizontalrichtung während des Fluidisierens vor, sind jedoch derart filigran ausgebildet, dass sie sich beim Abtransport von dem zumindest einen Bauteil weitestgehend lösen bzw. einfach abgebrochen werden können. Auf diese Weise kann die Qualität der Bauteile erhöht werden und die Stützelemente verbleiben beim nicht verfestigten Partikelmaterial in der Baubox, welches für eine Wiederaufbereitung herangezogen werden kann.

Analog dazu hat es sich als vorteilhaft erwiesen, wenn während des Fertigungsverfahrens Haltestrukturen am zumindest einen Bauteil mitausgebildet werden, welche das zumindest eine Bauteil von der Hubplatte bzw. der Bodenplatte beabstanden. Auf diese Weise kann erreicht werden, dass beim Fluidisieren etwaige Ablassöffnungen für das nicht verfestigte Partikelmaterial freibleiben und/oder das zumindest eine Bauteil leichter von der Abtransportvorrichtung aufgenommen werden kann. Die Haltestrukturen können auf der Bodenplatte bzw. der Hubplatte zuerst in einer Höhe gefertigt werden, welche zumindest der Höhe der Abtransportvorrichtung bzw. der Greifvorrichtung entspricht. Anschließend kann es vorteilhaft sein, wenn zumindest eine Lage, vorzugsweise einige Lagen, nicht verfestigten Partikelmaterials auf die Haltestrukturen in vertikaler Richtung aufgebracht wird, um die zu fertigenden Bauteile von den Haltestrukturen getrennt auszubilden. Auf diese Weise können die Haltestrukturen beim Abtransport in der Baubox verbleiben.

Entsprechend einer weiteren erfindungsgemäßen Ausprägung erfolgt vor dem Abtransport des zumindest einen Bauteils eine Positions- und/oder Lageerkennungserfassung mittels einer Positions- und/oder Lageerkennungsvorrichtung.

Die Erfassung von räumlicher Position und/oder Lage bzw. Orientierung des zumindest einen Bauteils kann vor dem Abtransport bzw. der Aufgreifen des zumindest einen Bauteils dazu genutzt werden, dass die Abtransportvorrichtung exakt, schnell und beschädigungsfrei das Bauteil ergreift. Gegebenenfalls werden die erfassten Informationen an eine Steuerung und/oder Anzeigemittel weitergeleitet um sie für den Bediener und/oder Roboter zugänglich zu machen, wodurch die Sicherheit und Qualität erhöht werden können. Die Positions- und/oder Lageerkennungsvorrichtung kann vorteilhafterweise derart angeordnet sein, dass sie den Innenraum der Baubox erfassen kann. Am einfachsten ist eine solche Positions- und/oder Lageerkennungsvorrichtung an der Abtransportvorrichtung angeordnet, jedoch ist auch eine ortsfeste Anordnung vorstellbar. Es ist außerdem denkbar, dass die Positions- und/oder Lageerkennungsvorrichtung als optische Vermessungseinrichtung ausgebildet ist, wodurch bei bereits freigelegten Bauteilen eine schnelle und effiziente Erfassung ermöglicht wird. Es ist jedoch auch denkbar, dass die Positions- und/oder Lageerkennungsvorrichtung alternativ oder zusätzlich als Röntgen- oder Radarvorrichtung ausgeführt sind, wodurch bereits während des Fluidisierens eine exakte Erfassung des zumindest einen Bauteils erfolgen kann.

Ferner liegt es im Rahmen der Erfindung, dass mittels Gewichtswiegezelle, oder eines zur Ermittlung des Füllgrades der Baubox geeigneten Sensors, der Füllgrad der Baubox nach dem Verkippvorgang bestimmt wird.

Die Gewichtswiegezelle bzw. der Sensor kann vorteilhafterweise an der Unterseite der Baubox angeordnet sein. Alternativ dazu können die Gewichtswiegezelle bzw. Sensor auch als Teil der Abtransporteinrichtung und/oder Manipulatorvorrichtung und/oder des Druckmittels ausgebildet sein.

Durch die Verwendung einer Gewichtswiegezelle und/oder eines Sensors, welcher den Füllgrad der Baubox bestimmen kann, ist es auf einfache Weise möglich den Prozesserfolg des Verkippvorgangs festzustellen. Die Gewichtswiegezelle und/oder der Sensor kann mit einer Rechnereinheit verbunden sein, welche wiederum mit der Abtransport- und/oder Manipulatorvorrichtung verbunden ist. Die Rechnereinheit kann die von der Gewichtswiegezelle und/oder dem Sensor ermittelten Daten prüfen und eine Freigabe eines anschließend an den Verkipp- bzw. Messvorgang erfolgenden Prozessschrittes freigeben oder verhindern. Es kann somit effizient vermieden werden, dass eventuelle an der Baubox anhaftendes nicht verfestigtes Partikelmaterial in der Baubox verbleibt. Dies kann die Prozesssicherheit und Qualität erhöhen.

Weiters kann in einer besonderen Ausführungsform die Bereitstellung der zumindest einen Baubox und/oder der zumindest einen Hubplatte mittels Fördersystemen durchgeführt werden.

Als Fördersysteme sind beispielweise flurgebundene Fördereinheiten, mit bzw. ohne eigenem Antrieb, wie z.B. einzelne autonome Fördershuttles bzw. ein Förderband/-kette vorstellbar. Überdies können als Fördersysteme auch Paternoster, oder ein Becherwerk, wie auch ein rotierbarer Rundtisch, verwendet werden. Das Fördersystem soll gewährleisten, dass beim eventuell erforderlichen Abtransport der Baubox bzw. der Hubplatte schnellstmöglich der Fertigungsprozess in einer neuen Baubox bzw. mit einer neuen Hubplatte vorgenommen werden kann.

Weitere Merkmale und Zweckmäßigkeiten des erfindungsgemäßen Verfahrens ergeben sich aus der Beschreibung und den Ausführungsbeispielen, sowie anhand der Figuren.

Zum besseren Verständnis der Erfindung wird diese anhand der nachfolgenden Figuren näher erläutert.

Es zeigen jeweils in stark vereinfachter, schematischer Darstellung:
- Fig. 1: Schnittansicht einer beispielhaften Anordnung einer Baubox mit darin angeordneten Bauteilen, sowie die Bauteile umgebendes nicht verfestigtes Partikelmaterial und einer Abtransporteinrichtung;
- Fig. 2: Schnittansicht einer beispielhaften Anordnung einer Baubox mit darin angeordnetem Bauteil, sowie das Bauteil umgebendes nicht verfestigtes fluidisiertes Partikelmaterial, sowie einer mit dem Bauteil zeitweilig kontaktierten beweglichen Abtransporteinrichtung;
- Fig. 3: Schnittansicht einer Ausführungsform mit Schwingungsgeber, welcher direkt (a) bzw. indirekt (b) das nicht verfestigte Partikelmaterial fluidisiert;
- Fig. 4: Schnittansicht einer Ausführungsform, wobei das nicht verfestigte Partikelmaterial durch eine Hubplatte in die Baubox abließt;
- Fig. 5: Schnittansicht einer Ausführungsform, wobei die Hubplatte über den oberen Rand der Baubox angehoben ist (a); bzw. das Bauteil mit Hubplatte mittels Antransportvorrichtung abtransportiert wird (b);
- Fig. 6: Schrägansicht einer Ausführungsform, wobei die Baubox in eine ersten Endposition verkippt ist (a) bzw. wobei die Hubplatte mit der Verstellvorrichtung gekoppelt ist (b);
- Fig. 7: Schrägansicht eines Ausführungsbeispiels, wobei die Baubox um eine Längskante der Baubox verkippt wird.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Das erfindungsgemäße Verfahren zum Entpacken zumindest eines mittels eines generativen Fertigungsverfahrens hergestellten Bauteils (2) aus einer Partikelmaterial-Schüttung aus nicht verfestigtem Partikelmaterial (3), wobei das nicht verfestigte Partikelmaterial (3) gemeinsam mit dem zumindest einen Bauteil (2) in einer, in Vertikalrichtung nach oben geöffneten und durch einen oberen Rand (6), sowie nach unten durch eine Bodenplatte (4), sowie seitlich durch eine Umwandung (5) begrenzte, Baubox (1) angeordnet ist, basiert darauf dass das nicht verfestigte Partikelmaterial (3) fluidisiert wird und das zumindest eine Bauteil (2) mittels einer Abtransportvorrichtung (8) von der Baubox (1) abtransportiert wird, wobei der Hauptteil des nicht verfestigten Partikelmaterial (3) in der Baubox (1) verbleibt. Insbesondere kann vorgesehen sein, dass zwischen 70% und 100%, insbesondere zwischen 90% und 100%, bevorzugt zwischen 97% und 100%, des nicht verfestigten Partikelmaterials 3 in der Baubox 1 verbleibt.

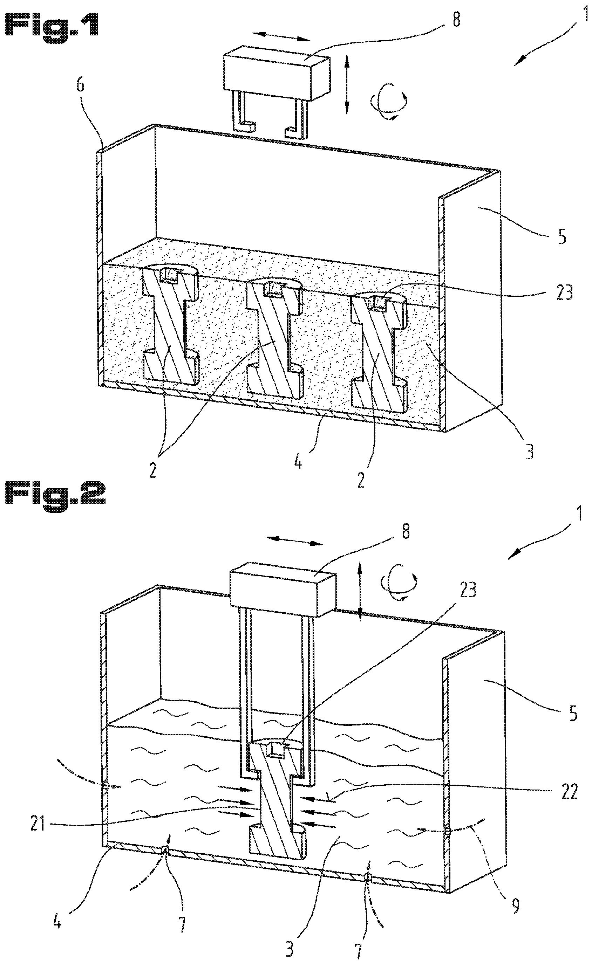

Wie in Fig. 1 ersichtlich ist zumindest ein Bauteil 2, im gezeigten Beispiel drei Bauteile 2, innerhalb einer Baubox 1 mittels eines generativen Fertigungsverfahrens hergestellt worden. Wie gut aus der Fig. 1 ersichtlich umfasst die Baubox 1 eine Umwandung 5 welche in Vertikalrichtung nach oben durch einen oberen Rand 6 begrenzt ist, und in deren Innenraum das zumindest eine Bauteil 2, sowie nicht verfestigtes Partikelmaterial 3 aufgenommen sind.

Die Baubox 1 kann weitere Komponenten, wie etwa eine Verstellvorrichtung 11, eine Hubplatte 12, oder auch Eintrittsöffnungen 7 aufweisen, wie insbesondere in den Fig. 2 bis Fig. 7 ersichtlich. Die Eintrittsöffnungen 7 können dabei verschließbar oder auch als Rückschlagventil ausgebildet sein. Außerdem kann die Baubox 1 zumindest um eine Verkippachse 14 verdrehbar bzw. verkippbar ausgeführt sein und mit zumindest einer Anhebevorrichtung 15 koppelbar sein. Ferner ist die Anordnung einer nicht weiters dargestellten Positions- und/oder Lageerkennungsvorrichtung derart vorstellbar, dass die Position und/oder Lage des zumindest einen Bauteils 2 erfasst werden kann. Die Positions- und/oder Lageerkennungsvorrichtung kann im einfachsten Fall an der Abtransportvorrichtung 8 angeordnet sein.

Ferner kann die Bodenplatte 4 der Baubox 1 relativ zur Umwandung 5 verschiebbar ausgebildet sein.

Die in den Fig. 1-5, bzw. Fig. 7 dargestellte Abtransportvorrichtung 8 dient dazu das zumindest eine Bauteil 2 in Vertikal- und/oder Horizontalrichtung zu transportieren. Die Abtransportvorrichtung 8 kann zu diesem Zweck in Vertikalrichtung verschiebbar bzw. verstellbar, sowie in Horizontalrichtung verdrehbar und/oder verschiebbar und/oder schwenkbar ausgeführt sein. Bevorzugt ist die Abtransportvorrichtung 8 z.B. als Greifvorrichtung 16 ausgebildet, welche das zumindest eine Bauteil 2 zumindest zeitweilig form- und/oder kraftschlüssig kontaktiert und von der Baubox 1 abtransportiert. Das Aufnehmen des zumindest einen Bauteils 2 kann somit von oben, aber auch seitlich bzw. sogar von unten mittels der Abtransportvorrichtung 8 kontaktiert werden.

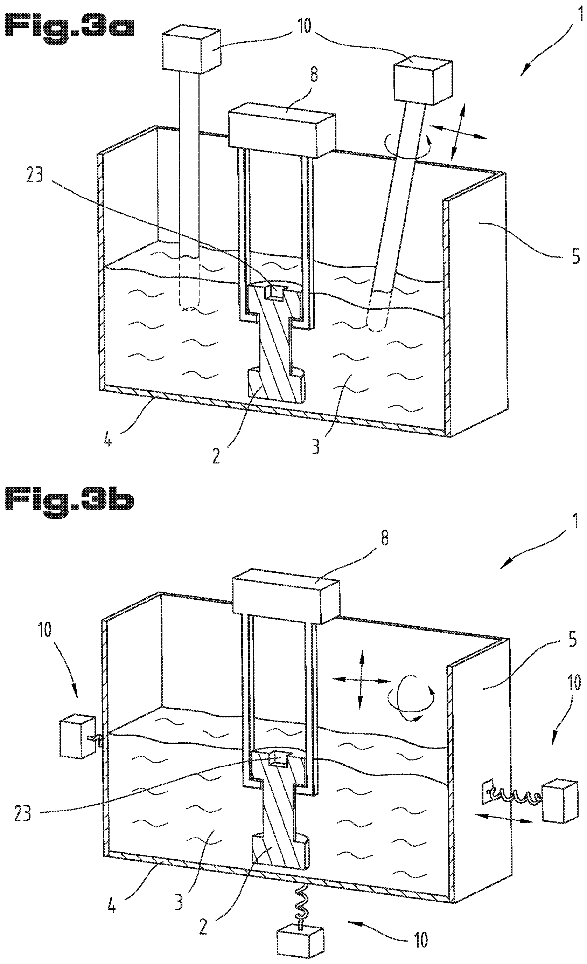

Wie in Fig. 2 dargestellt, kann das fluidisierte Partikelmaterial 3 eine Kraft 22 auf die Bauteiloberfläche 21 ausüben. Das zumindest eine Bauteil 2, kann von der Abtransportvorrichtung 8, und/oder einer Manipulatorvorrichtung 15, zumindest teilweise innerhalb des fluidisierten nicht verfestigten Partikelmaterials 3 bewegt werden. Hierdurch kann eine Reinigung der Bauteiloberfläche 21 erfolgen. Dieser Bewegungsvorgang ist analog auf die Fig. 3 übertragbar.

Das Fluidisieren kann wie in Fig. 2 gezeigt beispielsweise über Einblasen und/oder Einpressen eines gasförmigen Fluids 9 durch zumindest einer Eintrittsöffnung 7 in die Baubox 1 erfolgen. Es ist weiters aus Fig. 2 ersichtlich, dass das Fluid 9 seitlich aber auch im Wesentlichen von unten in die Baubox 1 derart eingeleitet wird, dass es das nicht verfestigte Partikelmaterial 3 nach oben hin zumindest teilweise durchströmt.

Eine andere Möglichkeit zur Fluidisierung des nicht verfestigen Partikelmaterials 3 ist das Einbringen von Schwingungen mittels zumindest eines Schwingungsgebers 10, wie in den Fig. 3a, b skizziert. Wie in Fig. 3a dargestellt, werden zwei Schwingungsgeber 10, z.B. in Form eines Rüttelstabs, in das Partikelmaterial 3 nahe dem zumindest einen Bauteil 2 zumindest teilweise eingeführt und durch Rotations- und/oder Translationsbewegungen und/oder Volumenänderung des Schwingungsgebers 10 wird das nicht verfestigte Partikelmaterial 3 in Schwingung versetzt und fluidisiert.

Eine weitere Möglichkeit zur Fluidisierung ist in Fig. 3b gezeigt, worin externe Schwingungsgeber 10 mit der Baubox 1 gekoppelt sind. Es ist wie in der Darstellung möglich die Schwingungsgeber 10 mit der Bodenplatte 4 und/oder der Umwandung 5 der Baubox 1 zumindest zeitweilig zu verbinden.

Die dargestellten Beispiele zur Fluidisierung nicht verfestigten Partikelmaterials 3 können einzeln oder auch miteinander kombiniert werden um das zumindest eine Bauteil 2 für die Abtransportvorrichtung 8 zugänglich zu machen. Es ist ferner möglich, dass die Abtransportvorrichtung 8 in das nicht verfestigte Partikelmaterial 3 eindringt und das zumindest eine Bauteil 2 kontaktiert, wie insbesondere aus Fig. 2 und Fig. 3 ersichtlich.

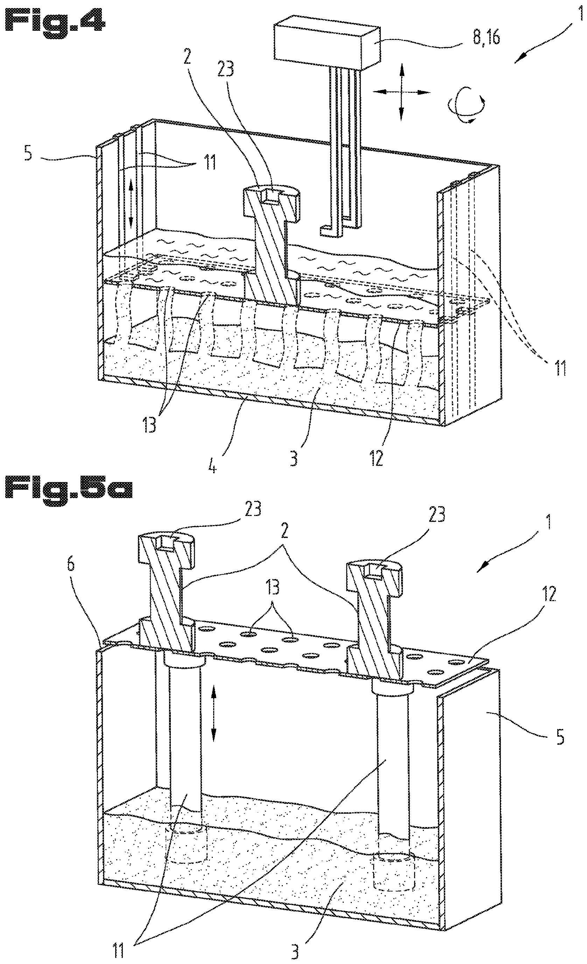

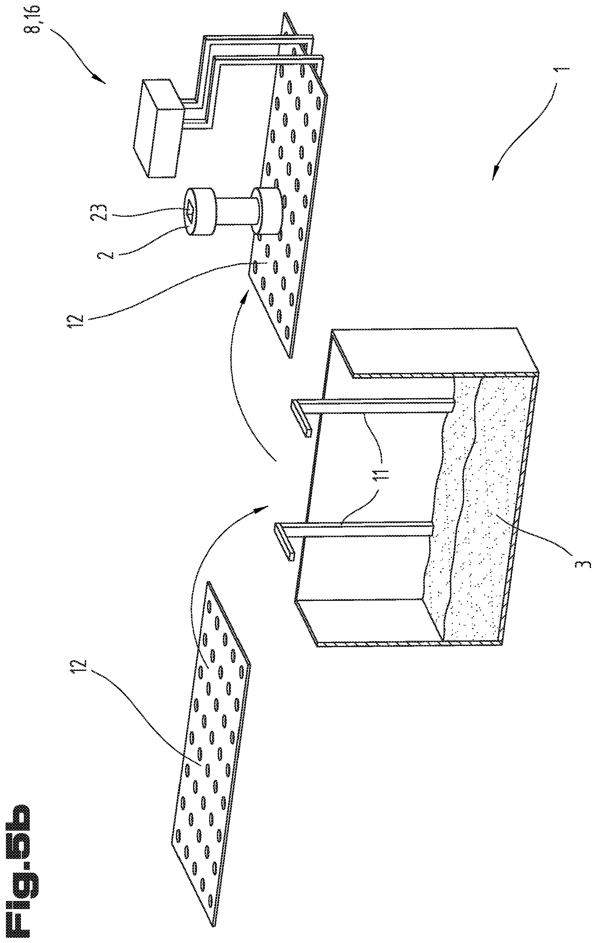

Ebenso ist es im Rahmen der Erfindung, dass das zumindest eine Bauteil 2 vor dem Abtransport mittels der Abtransportvorrichtung 8 um eine Horizontalachse zum zumindest 90° gedreht wird. Die in Fig. 1 mit nicht verfestigtem Partikelmaterial 3 gefüllten Ausnehmungen 23 am Kopf des Bauteils 2, können auf diese Weise einfach ausgekippt werden, wie in Fig. 4 bzw. Fig. 5 ersichtlich. Dies kann erfindungsgemäß analog für Hinterschneidungen und Vertiefungen an Bauteilen 2, welche durch den Fertigungsprozess mit nicht verfestigtem Partikelmaterial 3 gefüllt vorliegen können, übertragen werden.

Die in den Fig. 1 bis Fig. 5 dargestellten Bauteile 2 können nach dem generativen Fertigungsverfahrens räumlich angeordnet innerhalb des nicht verfestigten Partikelmaterials vorliegen und durch nicht weiter dargestellte Stütz- und/oder Haltestrukturen voneinander bzw. von der Hubplatte 12 bzw. der Bodenplatte 4 beabstandet ausgebildet sein. Diese Stütz- und/oder Haltestrukturen können beim Abtransport durch die Abtransportvorrichtung 8 vom Bauteil 2 getrennt werden und verbleiben somit im Wesentlichen in der Baubox 1.

In Fig. 4 ist eine weitere Ausführungsform des erfindungsgemäßen Verfahrens schematisch dargestellt, bei eine in Vertikalrichtung verschiebbare Verstellvorrichtung 11, umfassend eine mit der Verstellvorrichtung 11 koppelbare und mit verschließbaren Ablassöffnungen 13 versehene Hubplatte 12, in Vertikalrichtung relativ verschoben wird, wobei das nicht verfestigte Partikelmaterial 3 durch die Ablassöffnungen 13 der Hubplatte 12 in die Baubox 1 abfließt und von dieser aufgefangen wird. Die dargestellte Verstellvorrichtung 11 ist mittels je zwei Hebelarmen an der Längsseite der Umwandung 5 ausgeführt, kann jedoch auch stirn- und/oder längsseitig an der Innenseite der Umwandung 5 angeordnet sein.

Die in Fig. 4 schematisch angedeuteten Ablassöffnungen 13 können als verschließbare und sich in Vertikalrichtung durchgehend erstreckende Öffnungen der Hubplatte 12 ausgebildet sein. Für zumindest die Dauer des Fertigungsprozesses sollten die Ablassöffnungen 13 verschließbar sein können. Um das zumindest eine Bauteil 2 während des Entpackvorgangs, respektive den Abtransport desselben, für die Abtransportvorrichtung 8 einfacher kontaktierbar zu machen, ist es von Vorteil wenn die Ablassöffnungen 13 hierzu geöffnet werden um das fluidisierte nicht verfestigte Partikelmaterial 3 in die Baubox 1 abfließen zu lassen. Die Fluidisierung kann dafür in zuvor beschriebener Weise erfolgen. Die in Fig. 4 dargestellte Ausführungsform ist besonders vorteilhaft, da in vielen Fällen durch den Fertigungsprozess eine absenk- bzw. anhebbare Hubplatte 12 vorteilhaft sein kann.

In Fig. 5a ist eine weitere erfindungsgemäße Ausführung des Verfahrens dargestellt, wobei zur Erleichterung des Abtransports durch die Abtransportvorrichtung 8 die Hubplatte 12 in Vertikalrichtung zumindest bis zum oberen Rand 6 der Umwandung 5 der Baubox 1 verschoben wird und zumindest das zumindest eine Bauteil 2 von der Abtransportvorrichtung 8 oberhalb der Baubox 1 aufgenommen und abtransportiert wird.

Die in Fig. 4 und Fig. 5a dargestellten Ausführungsformen erlauben, dass die oben genannte Positions- und/oder Lagererkennung des zumindest einen Bauteils auf sehr einfache Weise optisch durchgeführt werden, wodurch sich neben Kosteneinsparungen vor allem prozesstechnische Vorteile ergeben.

Alternativ oder in Kombination zu einer optischen Positions- und/oder Lagererkennungsvorrichtung kann jedoch auch mittels Röntgen- und/oder Radarstrahlung die Positions- und/oder Lagererkennung des zumindest einen Bauteils 2 durchgeführt werden. Dies ermöglicht, dass die in Fig. 1 bis Fig. 3 dargestellten Bauteile 2 bereits während des Fluidisierens bzw. vor dem Abtransport exakt erfasst werden können und ein sicheres Aufgreifen der Bauteile 2 somit entschieden erleichtert werden kann.

Die Fig. 5b stellt eine besondere Ausprägung des Verfahrens dar, in welcher das zumindest eine Bauteil 2 nach dem Anheben über den oberen Rand 6 der Baubox 1 auf der Hubplatte 12 verbleibt und gemeinsam mit der Hubplatte 12 von der Abtransportvorrichtung 8 abtransportiert wird. Gleichsam ist eine andere, zweite Hubplatte 12 angedeutet, welche an Stelle der ersten, abtransportieren Hubplatte 12 wieder mit der Baubox 1 bzw. der Verstellvorrichtung 11 gekoppelt werden kann.

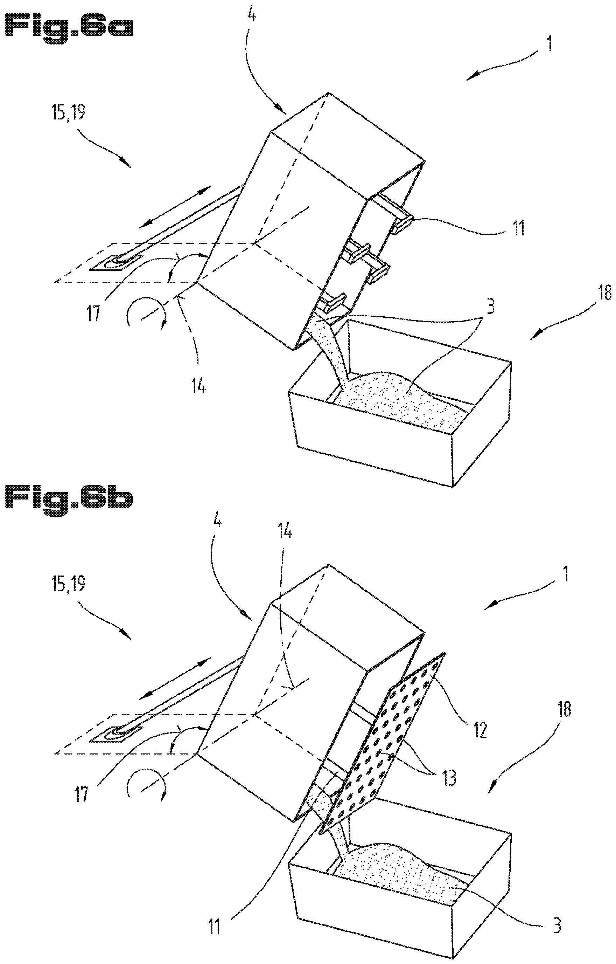

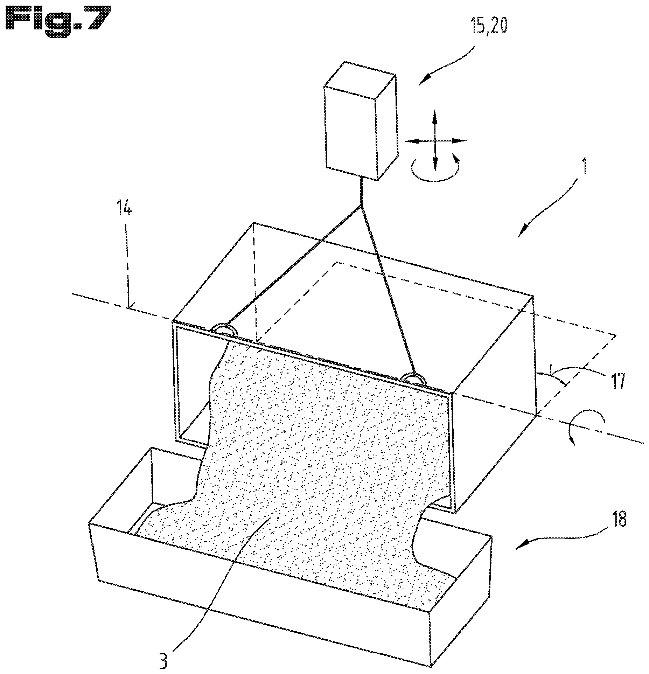

Wie bereits erwähnt ist es vorteilhaft, wenn die Baubox 1 verdreh und/oder verkippbar ausgeführt ist. Es kann somit nach dem Abtransport des zumindest einen Bauteils 2, sowie optional der Hubplatte 12, von der Baubox 1 das gesammelte nicht verfestigte Partikelmaterial 3 aus der Baubox 1 in einen Auffangbehälter 18 gekippt werden. In den Fig. 6 a, b und Fig. 7 b sind einige Ausführungsbeispiele des Verkippvorganges dargestellt.

Zur Durchführung des Verkippvorganges wird die Baubox 1 zumindest um einen Winkel 17 von zumindest 90° um eine horizontale Verkippachse 14 gekippt. Seitlich und/oder unterhalb der Baubox 1 kann ein Auffangbehälter 18 angeordnet sein, welcher zur Aufnahme des nicht verfestigten Partikelmaterials 3 aus der Baubox 1 dient. Wie in Fig. 6a angedeutet, kann der Verkippvorgang der Baubox 1 mittels einer Manipulatorvorrichtung 15 in Form eines Druckmittels 19 durchgeführt werden. In Fig. 6a ist ersichtlich, dass die Hubplatte 12 gemeinsam mit dem zumindest einen Bauteil 2 abtransportiert wurde und somit die Baubox 1 vor bzw. während des Verkippvorgangs ohne Hubplatte 12 dargestellt ist. Die Ausgangsposition der Baubox 1 ist als strichlierte Linie angedeutet.

Analog dazu ist es möglich, dass die Hubplatte 12 nach dem Abtransport des zumindest einen Bauteils 2 mit der Verstellvorrichtung 11 gekoppelt bleibt. Wie insbesondere aus dieser Darstellung sehr gut ersichtlich, kann die Hubplatte 12 durch die Verstellvorrichtung 11 über den oberen Rand 6 der Baubox 1 angehoben werden. Somit ist ein Abfließen des gesammelten, nicht verfestigten Partikelmaterials 3 in einen Auffangbehälter 18 begünstigt.

In ähnlicher Art und Weise kann aus Fig. 7 ersehen werden, dass die Manipulatorvorrichtung 15 auch als Koppelmittel 20 ausgeführt sein kann. Es ergeben sich analog zur Beschreibung der Fig. 6a und 6b die selben Merkmale hinsichtlich des Verkippvorgangs.

Der Fachmann kann aus den Beispielen in Fig. 6a, b und Fig. 7 ersehen und extrapolieren, dass die Verkippachse 14 der Baubox nicht zwingend entlang und/oder parallel zu einer Kante der Baubox 1 verlaufen muss, sondern beliebige Raumachse sein kann wodurch eine Schräglage der Baubox 1 einstellbar wird. Analog dazu können die Vertikal- und/oder Horizontalkräfte zur Verkippung der Baubox 1 gleichsam von einem Druckmittel 19, Koppelmittel 20 oder einer Kombination daraus eingebracht werden. Das zumindest eine Koppelmittel 20 soll dabei zu an der Baubox 1 angeordneten Aufnahmeelementen form- und/oder funktionskomplementär ausgebildet sein. In Fig. 7 ist ein Beispiel dargestellt, worin das Koppelmittel ein Seil oder eine Kette zur zeitweiligen Verbindung über genannte Aufnahmeelemente an der Baubox umfasst.

Die in den Fig. 1-5, bzw. Fig. 7 dargestellte Abtransportvorrichtung 8 kann im Besonderen auch derart ausgebildet sein um den Verkippvorgang der Baubox 1 als Manipulatorvorrichtung 15 durchzuführen. Weiters kann der Verkippvorgang der Baubox 1 stoßweise oder ruckartig erfolgen, und/oder mehrmalig. Hierfür ist auch eine Koppelung der Baubox 1 mit dem zumindest einen Schwingungsgeber 10 aus den Fig. 3 a, b möglich.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Baubox
- 2: Bauteil
- 3: Partikelmaterial
- 4: Bodenplatte
- 5: Umwandung
- 6: Rand
- 7: Eintrittsöffnungen
- 8: Abtransportvorrichtung
- 9: Fluid
- 10: Schwingungsgeber
- 11: Verstellvorrichtung
- 12: Hubplatte
- 13: Ablassöffnung
- 14: Verkippachse
- 15: Manipulatorvorrichtung
- 16: Greifvorrichtung
- 17: Winkel
- 18: Auffangbehälter
- 19: Druckmittel
- 20: Koppelmittel
- 21: Bauteiloberfläche
- 22: Kraft
- 23: Ausnehmung

## Patentansprüche

1. Verfahren zum Entpacken zumindest eines mittels eines generativen Fertigungsverfahrens hergestellten Bauteils (2) aus einer Partikelmaterial-Schüttung aus nicht verfestigtem Partikelmaterial (3),
wobei das nicht verfestigte Partikelmaterial (3) gemeinsam mit dem zumindest einen Bauteil (2) in einer, in Vertikalrichtung nach oben geöffneten und durch einen oberen Rand (6), sowie nach unten durch eine Bodenplatte (4), sowie seitlich durch eine Umwandung (5) begrenzte, Baubox (1) angeordnet ist,
wobei das nicht verfestigte Partikelmaterial (3) fluidisiert wird und
das zumindest eine Bauteil (2) mittels einer Abtransportvorrichtung (8) von der Baubox (1) abtransportiert wird, wobei das nicht verfestigte Partikelmaterial (3) in der Baubox (1) verbleibt, **dadurch gekennzeichnet, dass** der Abtransport des zumindest einen Bauteils (2) mittels einer als Greifvorrichtung (16) ausgeführten Abtransportvorrichtung (8) erfolgt.

2. Verfahren nach Anspruch 1 **dadurch gekennzeichnet, dass** vor dem Abtransport das zumindest eine Bauteil (2) mittels der Abtransportvorrichtung (8) zumindest teilweise innerhalb des nicht verfestigten fluidisierten Partikelmaterials (3) zur Reinigung und/oder Verbesserung der Oberflächenbeschaffenheit der Bauteiloberfläche (21) bewegt wird.

3. Verfahren nach Anspruch 1 **dadurch gekennzeichnet, dass** vor dem Abtransport das zumindest eine Bauteil (2) zur Reinigung mittels der Abtransportvorrichtung (8) um eine Horizontachse zumindest um 90° gedreht wird.

4. Verfahren nach einem der vorhergehenden Ansprüche **dadurch gekennzeichnet, dass** das Fluidisieren des nicht verfestigen Partikelmaterials (3) durch Einblasen oder Einpressen eines Fluids (9), bevorzugt Luft, erfolgt.

5. Verfahren nach Anspruch 4 **dadurch gekennzeichnet, dass** das Fluid (9) an zumindest einer Eintrittsöffnung (7), bevorzugt von unten, in die Baubox (1) geleitet wird.

6. Verfahren nach einem der Ansprüche 1 bis 3 **dadurch gekennzeichnet, dass** das Fluidisieren durch Einbringen von Schwingungen mittels zumindest eines Schwingungsgebers (10) direkt und/oder indirekt in das nicht verfestigte Partikelmaterial (3) erfolgt.

7. Verfahren nach einem der vorhergehenden Ansprüche **dadurch gekennzeichnet, dass** eine in Vertikalrichtung verschiebbare Verstellvorrichtung (11), umfassend eine mit der Verstellvorrichtung (11) koppelbare und mit verschließbaren Ablassöffnungen (13) versehene Hubplatte (12), in Vertikalrichtung nach oben verschoben wird, wobei das nicht verfestigte Partikelmaterial (3) durch die Ablassöffnungen (13) der Hubplatte (12) in die Baubox (1) abfließt und von dieser aufgefangen wird.

8. Verfahren nach Anspruch 7 **dadurch gekennzeichnet, dass** die Hubplatte (12) in Vertikalrichtung zumindest bis zum oberen Rand (6) der Umwandung (5) der Baubox (1) verschoben wird und zumindest das zumindest eine Bauteil (2) von der Abtransportvorrichtung (8) oberhalb der Baubox (1) aufgenommen und abtransportiert wird.

9. Verfahren nach Anspruch 8 **dadurch gekennzeichnet, dass** das zumindest eine Bauteil (2) nach dem Anheben über den oberen Rand (6) der Baubox (1) auf der Hubplatte (12) verbleibt und gemeinsam mit der Hubplatte (12) von der Abtransportvorrichtung (8) abtransportiert wird.

10. Verfahren nach Anspruch 9 **dadurch gekennzeichnet, dass** nach dem Abtransport der Hubplatte (12) und des zumindest einen Bauteils (2) eine andere Hubplatte (12) mit der verschiebbaren Verstellvorrichtung (11) gekoppelt wird.

11. Verfahren nach einem der vorhergehenden Ansprüche **dadurch gekennzeichnet, dass** zwischen 70% und 100%, insbesondere zwischen 90% und 100%, bevorzugt zwischen 97% und 100%, des nicht verfestigten Partikelmaterials (3) in der Baubox (1) verbleibt.

12. Verfahren nach einem der vorhergehenden Ansprüche **dadurch gekennzeichnet, dass** im Anschluss an den Abtransport des zumindest einen Bauteils (2) ein Verkippvorgang erfolgt, wobei die Baubox (1) um einen Winkel (17) von zumindest 90° um eine horizontale Verkippachse (14) gekippt wird.

13. Verfahren nach Anspruch 12 **dadurch gekennzeichnet, dass** der Verkippvorgang mittels zumindest einer Manipulatorvorrichtung (15) durchgeführt wird.

14. Verfahren nach Anspruch 13 **dadurch gekennzeichnet, dass** die Abtransportvorrichtung (8) als Manipulatorvorrichtung (15) zur Verkippung der Baubox (1) verwendet wird.

15. Verfahren nach Anspruch 13 oder 14 **dadurch gekennzeichnet, dass** als Manipulatorvorrichtung (15) ein Koppelmittel (20) mit der Baubox (1) zumindest zeitweilig verbunden wird und durch Bewegung des Koppelmittels (20) die Baubox (1) um die Verkippachse (14) gekippt wird.

16. Verfahren nach Anspruch 13 oder 14 **dadurch gekennzeichnet, dass** als Manipulatorvorrichtung (15) ein Druckmittel (19) mit der Bodenplatte (4) der Baubox (1) gekoppelt wird und die Baubox (1) um die Verkippachse (14) gekippt wird.

17. Verfahren nach einem der Ansprüche 12 bis 16 **dadurch gekennzeichnet, dass** der Verkippvorgang der Baubox (1) zumindest zwei Mal durchgeführt wird.

18. Verfahren nach einem der Ansprüche 12 bis 17 **dadurch gekennzeichnet, dass** der Verkippvorgang stoßweise durchgeführt wird.

19. Verfahren nach einem der Ansprüche 12 bis 18 **dadurch gekennzeichnet, dass** der Schwingungsgeber (10) während des Verkippvorgangs mit der Baubox (1) gekoppelt ist und das nicht verfestigte Partikelmaterial (3) durch Aufbringen von Schwingungen von der Baubox (1) gelöst wird.

20. Verfahren nach einem der vorhergehenden Ansprüche **dadurch gekennzeichnet, dass** vor dem Abtransport des zumindest einen Bauteils (2) eine Positions- und/oder Lageerfassung des zumindest einen Bauteils (2) mittels einer Positions- und/oder Lagererfassungsvorrichtung erfolgt.

## Claims

1. A method for unpacking at least one component (2) produced by means of an additive manufacturing process, from a particulate material bed of non-consolidated particulate material (3),
wherein the non-consolidated particulate material (3), together with the at least one component (2), is arranged in a build box (1) that is open at the top in the vertical direction and delimited by an upper edge (6), and by a base plate (4) at the bottom, and by a surrounding wall (5) on the sides,
wherein the non-consolidated particulate material (3) is fluidized and
the at least one component (2) is transported away from the build box (1) by means of a transport device (8), wherein the non-consolidated particulate material (3) remains in the build box (1), **characterized in that** the at least one component (2) is transported away by means of a transport device (8) formed as a gripper device (16).

2. The method according to claim 1, **characterized in that** before being transported away, the at least one component (2) is moved by the transport device (8) at least partially within the non-consolidated fluidized particulate material (3) for cleaning and/or improving of the surface finish of the component surface (21).

3. The method according to claim 1, **characterized in that** before being transported away, the at least one component (2) is rotated, by means of the transport device (8), by 90° about a horizontal axis for cleaning.

4. The method according to one of the preceding claims, **characterized in that** the fluidization of the non-consolidated particulate material (3) is carried out by blowing in or injecting a fluid (9), preferably air.

5. The method according to claim 4, **characterized in that** the fluid (9) is guided into the build box (1), preferably from below, at at least one inlet opening (7).

6. The method according to one of claims 1 to 3, **characterized in that** the fluidization is carried out by introducing vibrations directly and/or indirectly into the non-consolidated particulate material (3) by means of at least one vibration generator (10).

7. The method according to one of the preceding claims, **characterized in that** an adjusting device (11) displaceable in the vertical direction, comprising a lifting plate (12), which can be coupled to the adjusting device (11) and is equipped with closable outlet openings (13), is displaced upwards in the vertical direction, wherein the non-consolidated particulate material (3) flows off through the outlet openings (13) of the lifting plate (12) into the build box (1) and is collected by the same.

8. The method according to claim 7, **characterized in that** the lifting plate (12) is displaced in the vertical direction, at least up to the upper edge (6) of the surrounding wall (5) of the build box (1), and at least the at least one component (2) is collected and transported away by the transport device (8) above the build box (1).

9. The method according to claim 8, **characterized in that** the at least one component (2) remains on the lifting plate (12) after being lifted above the upper edge (6) of the build box (1) and is transported away together with the lifting plate (12) by means of the transport device (8).

10. The method according to claim 9, **characterized in that** after the lifting plate (12) and the at least one component (2) are transported away, a different lifting plate (12) is coupled to the displaceable adjusting device (11).

11. The method according to one of the preceding claims, **characterized in that** between 70% and 100%, in particular between 90% and 100%, preferably between 97% and 100% of the non-consolidated particulate material (3) remains in the build box (1).

12. The method according to one of the preceding claims, **characterized in that** subsequently to the transport of the at least one component (2), a tilting operation takes place, wherein the build box (1) is tilted by an angle (17) of at least 90° about a horizontal tilting axis (14).

13. The method according to claim 12, **characterized in that** the tilting operation is carried out by means of at least one manipulator device (15).

14. The method according to claim 13, **characterized in that** the transport device (8) is used as a manipulator device (15) for tilting the build box (1).

15. The method according to claim 13 or 14, **characterized in that** as a manipulator device (15), a coupling means (20) is at least temporarily connected to the build box (1) and the build box (1) is tilted about the tilting axis (14) due to movement of the coupling means (20).

16. The method according to claim 13 or 14, **characterized in that** as a manipulator device (15), a pressure means (19) is coupled to the base plate (4) of the build box (1), and the build box (1) is tilted about the tilting axis (14).

17. The method according to one of claims 12 to 16, **characterized in that** the tilting operation of the build box (1) is carried out at least twice.

18. The method according to one of claims 12 to 17, **characterized in that** the tilting operation is carried out intermittently.

19. The method according to one of claims 12 to 18, **characterized in that** during the tilting operation, the vibration generator (10) is coupled to the build box (1) and the non-consolidated particulate material (3) is detached from the build box (1) due to the application of vibrations.

20. The method according to one of the preceding claims, **characterized in that** before the at least one component (2) is transported away, a detection of the position and/or location of the at least one component (2) is carried out by a position and/or location detection device.

## Revendications

1. Procédé de déballage d'au moins une pièce (2) fabriquée au moyen d'un procédé de fabrication génératif à partir d'un matériau particulaire en vrac constitué d'un matériau particulaire non solidifié (3),
dans lequel le matériau particulaire non solidifié (3) est disposé conjointement avec l'au moins une pièce (2) dans une boîte (1) ouverte vers le haut dans la direction verticale et délimitée par un bord supérieur (6), ainsi que vers le bas par une plaque de fond (4), et latéralement par une paroi (5),
dans lequel le matériau particulaire non solidifié (3) est fluidisé et
l'au moins une pièce (2) est évacuée au moyen d'un dispositif d'évacuation (8) hors de la boîte (1), dans lequel le matériau particulaire non solidifié (3) reste dans la boîte (1), **caractérisé en ce que** l'évacuation de l'au moins une pièce (2) a lieu au moyen d'un dispositif d'évacuation (8) conçu comme un dispositif de préhension (16).

2. Procédé selon la revendication 1, **caractérisé en ce que**, avant l'évacuation, l'au moins une pièce (2) au moyen du dispositif d'évacuation (8) est déplacée au moins partiellement à l'intérieur du matériau particulaire fluidisé non solidifié (3) pour le nettoyage et/ou l'amélioration de la qualité de surface de la surface de la pièce (21).

3. Procédé selon la revendication 1, **caractérisé en ce que**, avant l'évacuation, l'au moins une pièce (2) est tournée d'au moins 90° pour le nettoyage au moyen du dispositif d'évacuation (8) autour d'un axe horizontal.

4. Procédé selon l'une des revendications précédentes, **caractérisé en ce que** la fluidisation du matériau non solidifié (3) a lieu par soufflage ou compression d'un fluide (9), de préférence de l'air.

5. Procédé selon la revendication 4, **caractérisé en ce que** le fluide (9) est guidé au niveau d'au moins une ouverture d'entrée (7), de préférence par le bas, dans la boîte (1).

6. Procédé selon l'une des revendications 1 à 3, **caractérisé en ce que** la fluidisation a lieu par l'introduction de vibrations au moyen d'au moins un générateur de vibrations (10) directement et/ou indirectement dans le matériau particulaire non solidifié (3).

7. Procédé selon l'une des revendications précédentes, **caractérisé en ce qu'**un dispositif de réglage (11) coulissant dans la direction verticale, comprenant une plaque de levage (12) pouvant être couplée avec le dispositif de réglage (11) et munie d'ouvertures d'évacuation coulissantes (13), est coulissée dans la direction verticale vers le haut, dans lequel le matériau particulaire non solidifié (3) sort par les ouvertures d'évacuation (13) de la plaque de levage (12) vers la boîte (1) et est collecté par celle-ci.

8. Procédé selon la revendication 7, **caractérisé en ce que** la plaque de levage (12) est coulissée dans la direction verticale au moins jusqu'au bord supérieur (6) de la paroi (5) de la boîte (1) et au moins l'au moins une pièce (2) est prise en charge par le dispositif d'évacuation (8) au-dessus de la boîte (1) et évacué.

9. Procédé selon la revendication 8, **caractérisé en ce que** l'au moins une pièce (2) reste, après le levage au-dessus du bord supérieur (6) de la boîte (1), sur la plaque de levage (12) et est évacuée conjointement avec la plaque de levage (12) par le dispositif d'évacuation (8).

10. Procédé selon la revendication 9, **caractérisé en ce que**, après l'évacuation de la plaque de levage (12) et de l'au moins une pièce (2), une autre plaque de levage (12) est couplée avec le dispositif de réglage coulissant (11).

11. Procédé selon l'une des revendications précédentes, **caractérisé en ce que**, entre 70 % et 100 %, plus particulièrement entre 90 % et 100 %, de préférence entre 97 % et 100 % du matériau particulaire non solidifié (3) reste dans la boîte (1).

12. Procédé selon l'une des revendications précédentes, **caractérisé en ce que**, après l'évacuation de l'au moins une pièce (2), un processus de basculement a lieu, dans lequel la boîte (1) est basculée d'un angle (17) d'au moins 90° autour d'un axe de basculement horizontal (14).

13. Procédé selon la revendication 12, **caractérisé en ce que** le processus de basculement est effectué au moyen d'au moins un dispositif de manipulation (15).

14. Procédé selon la revendication 13, **caractérisé en ce que** le dispositif d'évacuation (8) est utilisé comme un dispositif de manipulation (15) pour le basculement de la boîte (1).

15. Procédé selon la revendication 13 ou 14, **caractérisé en ce que**, en tant que dispositif de manipulation (15), un moyen de couplage (20) est relié avec la boîte (1) au moins en deux parties et, grâce au déplacement du moyen de couplage (20), la boîte (1) est basculée autour de l'axe de basculement (14).

16. Procédé selon la revendication 13 ou 14, **caractérisé en ce que**, en tant que dispositif de manipulation (15), un moyen de pression (19) est couplé avec la plaque de fond (4) de la boîte (1) et la boîte (1) est basculée autour de l'axe de basculement (14).

17. Procédé selon l'une des revendications 12 à 16, **caractérisé en ce que** le processus de basculement de la boîte (1) est exécuté au moins deux fois.

18. Procédé selon l'une des revendications 12 à 17, **caractérisé en ce que** le processus de basculement est effectué par à-coups.

19. Procédé selon l'une des revendications 12 à 18, **caractérisé en ce que** le générateur de vibrations (10) est couplé pendant le processus de basculement avec la boîte (1) et le matériau particulaire non solidifié (3) est détaché de la boîte (1) par l'apport de vibrations.

20. Procédé selon l'une des revendications précédentes, **caractérisé en ce que**, avant l'évacuation de l'au moins une pièce (2), une détection de position de l'au moins une pièce (2) a lieu à l'aide d'un dispositif de détection de position.
